# EUROPÄISCHE PATENTSCHRIFT

(11) **EP 3 738 740 B1**
(45) Veröffentlichungstag und Bekanntmachung des Hinweises auf die Patenterteilung: **10.08.2022**
(21) Anmeldenummer: 19174180.0
(22) Anmeldetag: 13.05.2019
(51) Int. Cl.: B29C 43/46, B29C 43/52, B29C 33/30, B29B 9/14, F28D 11/04, B29C 43/24, B29C 43/28, B29L 31/00, B29C 33/04, B29K 105/08, B29K 105/10, F28F 5/02, B29B 9/06, F28D 1/053

(54) **VORRICHTUNG ZUR QUERSCHNITTSFORMUNG EINER VIELZAHL PARALLEL GEFÜHRTER KUNSTSTOFF-FASERBÜNDEL**
DEVICE FOR CROSS-SECTIONAL FORMING OF A PLURALITY OF PARALLEL PLASTIC FIBRE BUNDLES
DISPOSITIF DE FORMATION TRANSVERSALE D'UNE PLURALITÉ DE FAISCEAUX DE FIBRES PLASTIQUE PARALLÈLES

(43) Veröffentlichungstag der Anmeldung: 18.11.2020
(73) Patentinhaber: Feddem GmbH & Co. KG, 53489 Sinzig (DE)
(72) Erfinder: Jost, Sebastian, 56653 Wehr (DE)
(74) Vertreter: Meyer, Ludgerus

(56) Entgegenhaltungen:
- EP-A1- 2 921 275
- CN-A- 109 366 834
- US-A- 4 079 114
- US-A- 5 639 410
- US-A1- 2001 011 408
- US-A1- 2011 175 253

## Beschreibung

Die Erfindung betrifft eine Vorrichtung zur Querschnittsformung einer Vielzahl parallel nebeneinander über wenigstens eine drehbare Formrolle geführten Kunststoff-Faserbündel.

Leichtbauelemente aus Kunststoff, wie sie vielfach in der Automobilindustrie oder im Flugzeugbau eingesetzt werden, enthalten zur Gewichtseinsparung bei gleichzeitig hoher Festigkeit in der Regel Fasermaterialien aus Glas oder Kohlenstoff. Die Fasermaterialien werden mittels einer Imprägniereinrichtung in die Polymerschmelze eines Kunststoffmaterials eingebunden und dann als Kunststoff-Faserbündel zu Pellets, Granulat oder Bändchen mit definiertem Querschnitt verarbeitet, die in nachfolgenden Anlagen und Verfahren, insbesondere Spritzgussverfahren, zur Herstellung der Leichtbauelemente verwendet werden.

Die Querschnittsformung bzw. Kalibrierung der imprägnierten Faserbündel kann im einfachsten Fall über eine Düse mit definiertem Durchmesser erfolgen. Allerdings lässt sich eine genauere Querschnittsformung nur in teilfestem, aber noch erwärmtem Zustand des mit Kunststoffmaterial versetzten Faserbündels erreichen, so dass es zur genaueren Kalibrierung erforderlich ist, das Kunststoff-Faserbündel nach Austritt aus der Düse zunächst in einem Wasserbad herunter zu kühlen und dann in noch verformbarem Zustand nachzuformen.

Hierzu sind Formrollen bekannt geworden, die die noch warmen oder heißen Kunststoff-Faserbündel in Oberflächenvertiefungen mit definiertem Querschnitt abkühlen, bevor die Kunststoff-Faserbündel aufgerollt oder einem Granulator zugeführt werden.

Eine Formrolle zur Querschnittsformung ist üblicherweise dem Wasserbad einer Imprägniereinheit unmittelbar nachgeschaltet. Da jedoch auch Bedarf an imprägnierten Faserbündeln unterschiedlichen Querschnitts bestehen kann, bedarf es der Anpassung der Formrolle an solche unterschiedlichen Querschnitte, was in der Regel dadurch erfolgt, dass die Formrolle entsprechend der neuen Aufgabenstellung durch eine Formrolle mit entsprechend geänderter Querschnittsform der Formvertiefungen ersetzt wird. Der Wechsel einer Formrolle und die Reinigung können aufwändig und zeitraubend sein, insbesondere, wenn mehrere Formrollen hintereinander angeordnet sind. EP 2 921 275 A1 offenbart einen Kalander für die Bearbeitung von Materialien, bei dem eine oder beide Walzen eines Laminierwalzenpaares einen thermoregulierten Mantel mit einer Oberflächenmorphologie aufweisen, die Gravuren, Rillen oder geometrische Prägungen umfasst. Ferner offenbart EP 2 921 275 A1 , dass durch Drehung einer Drehscheiben eine gewünschte Laminierwalze schnell in ihre aktive Stellung gebracht werden kann.

Es besteht daher die Aufgabe, eine Vorrichtung zur Querschnittsformung einer Vielzahl parallel geführter imprägnierter Kunststoff-Faserbündel anzugeben, deren Formrolle(n) die Rundheit der Kunststoff-Faserbündel verbessert, deren Stillstandzeit beim Wechsel einer oder mehrerer Formrollen klein gehalten werden kann, die kompakt aufgebaut ist, gleichzeitig eine effektive Kühlung von Kunststoff-Faserbündeln ermöglicht und in weitem Maße einstellbar ist.

Diese Aufgabe wird durch die im Anspruch 1 angegebene Erfindung gelöst. Weitergehende Ausgestaltungen der Erfindung sind in Unteransprüchen angegeben.

Bei der Erfindung wird eine Formrolle verwendet, die mittels einer Schnellwechselvorrichtung in seitlichen Führungsplatten gelagert ist. Die Formrolle weist stirnseitig Drehkupplungen auf, über die Flüssigmedien, insbesondere zur Kühlung, durch die Formrolle hindurchgeführt werden. Nach Abtrennung der Zu- und Ableitungen der Drehkupplungen und Entfernen der Schnellwechselvorrichtung kann die Formrolle einfach aus dem Gestell herausgenommen werden.

Vorzugsweise werden bei der Erfindung zur Nachformung von Kunststoff-Faserbündeln drei gleichartige Formrollen verwendet, die dreieckförmig angeordnet sind und jeweils an ihrer Oberfläche mit einer Mehrzahl parallel angeordneter umlaufender Formvertiefungen versehen sind, in denen der Querschnitt von zugeführten mit Kunststoff imprägnierten Faserbündeln entsprechend der Querschnittsform der Formvertiefungen formbar ist.

Die Faserbündel werden dabei zwischen einem Paar von zwei aufeinander folgenden Formrollen an einer ersten Seite der Faserbündel und einer dritten Formrolle, welche sich an der zweiten Seite der Kunststoff-Faserbündel in Laufrichtung der Kunststoff-Faserbündel zwischen der ersten und zweiten Formrolle des Paares von Formrollen befindet, hindurchgeführt. Der Abstand zwischen den Formrollen kann horizontal und/oder vertikal einstellbar sein. Die Oberflächentemperatur der Formrollen ist vorzugsweise steuerbar.

Die Zahl der Formrollen und ihre Anordnung zueinander kann nach Bedarf auch anders gewählt werden. So kann bei sehr hohen Ansprüchen an die Formgenauigkeit oder bei speziellen Polymeren eine größere Zahl von auf die Faserbündel einwirkenden Formrollen, z.B. eine Anordnung mit 2 x 3 Formrollen, gewählt werden.

Diese Ausbildung der Erfindung erlaubt eine effektive Querschnittsformung von Kunststoff-Faserbündeln beim Durchlauf durch den Spalt zwischen den Formrollen bei gleichzeitiger Kühlung, so dass die Kunststoff-Faserbündel die Vorrichtung mit definierter Querschnittsform verlassen.

Die Einstellung des Abstands der Formrollen in ihrer horizontalen und vertikalen Lage ermöglicht eine Steuerung der Spannung der Kunststoffstränge, ihre Verweildauer auf den Formrollen und entsprechende Steuerung der Kühlwirkung.

Die Formrollen sind vorzugsweise so angeordnet, dass eine erste und eine zweite Formrolle in einer horizontalen Ebene unterhalb der Kunststoffstränge und eine dritte Formrolle oberhalb der Kunststoffstränge mit vertikalem Abstand zu den ersten und zweiten Formrollen liegen. Die vertikale Stellung der dritten Formrolle ist dabei vorzugsweise so gewählt, dass diese Formrolle die Kunststoff-Faserbündel zwischen die erste und zweite Formrolle eindrückt, um so den von den Kunststoffsträngen berührten Umschlingungswinkel der Formrollen zu erweitern, die Eindruckkraft der Kunststoffstränge in die Formvertiefungen zu vergrößern und damit die Formungsqualität zu verbessern.

Die Anordnung der unteren und der oberen Formrollen zueinander kann auch in der Vertikalen gespiegelt sein.

Vorzugsweise sind die Formrollen stirnseitig in seitlichen Führungsplatten eines Gestells gelagert, wobei ein erstes Führungsplattenpaar die erste und zweite Formrolle aufnimmt und ein zweites Führungsplattenpaar die dritte Formrolle trägt. Die Führungsplatten lassen sich vorzugsweise über Stangenführungen vertikal verschieben, wobei die Verschiebung synchron erfolgt, um die Verschiebung über die gesamte Länge der Formrollen gleichmäßig ausführen zu können.

Ferner kann auch vorgesehen sein, dass der horizontale Abstand der ersten und zweiten Formrollen einstellbar ist. Die vertikale Anordnung der Formrollen in Bezug auf die Ober- oder Unterseite der Kunststoff-Faserbündel kann auch umgekehrt werden.

Mit Hilfe der erfindungsgemäßen vereinfachten Vorrichtung können mit Kunststoff imprägnierte Faserbündel, daraus hergestellte Pellets und Granulate derart kalibriert werden, dass ihre Rundheit verbessert ist, dass sie bei der Formung zur Verbesserung ihrer Eigenschaften noch einmal durchgewalkt werden, dass sie eine bessere Laufgüte in nachfolgenden Transportanlagen und schließlich ein besseres Erscheinungsbild aufweisen.

Die Erfindung wird nachstehend anhand eines Ausführungsbeispiels näher erläutert. Es zeigen:
- Fig. 1: eine isometrische Ansicht einer Vorrichtung zur Querschnittsformung von Kunststoffsträngen nach der Erfindung,
- Fig. 2: eine Längsschnittansicht einer Formrolle,
- Fig. 3: eine vergrößerte Ansicht einer Schnellwechselvorrichtung für eine Formrolle, und
- Fig. 4: eine Stirnansicht der Schnellwechselvorrichtung für eine Formrolle.

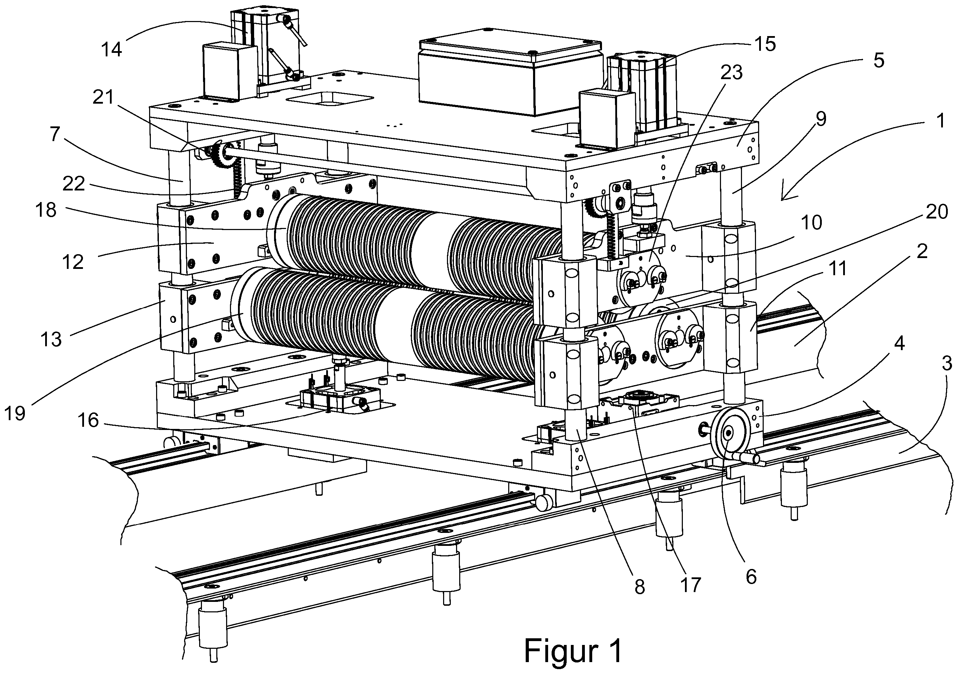

Die in Figur 1 dargestellte Vorrichtung enthält ein Gestell 1, das im Wesentlichen aus einem Paar oberer Brückenträger 5 und einem Paar unterer Brückenträger 4 gebildet ist, welche über vier vertikale Führungsstangen 7, 8, 9 miteinander verbunden sind. Das Gestell 1 ist auf einer Schienenanordnung mit zwei parallelen Schienen 2 und 3 mittels Handrad 6 in horizontaler Ebene verfahrbar.

An den Führungsstangen 7, 8, 9 ist übereinander ein Paar von oberen Führungsplatten 10, 12 und ein Paar von unteren Führungsplatten 11, 13 vertikal verschiebbar angeordnet. Das Paar der Führungsplatten 10, 12 kann über hydraulische Hubvorrichtungen 14, 15 angehoben oder abgesenkt werden. Entsprechend lässt sich das Paar der unteren Führungsplatten 12, 14 über die unteren Hubvorrichtungen 16, 17 anheben oder absenken.

Um die Synchronität des Anhebens und Absenkens zu gewährleisten, ist den Paaren von Führungsplatten ein Paar von über eine Verbindungsstange miteinander verbundenen Zahnrädern 21 zugeordnet, die in ein Paar von Zahnstangen 22 an beiden Seiten der Vorrichtung eingreifen und damit ein parallele Verstellung der Führungsplatten erlauben.

Zwischen dem Paar der oberen Führungsplatten 10, 12 ist eine obere Formrolle 18 angeordnet, deren Achse seitlich in den Führungsplatten 10, 12 frei drehbar gelagert ist. Das Paar von unteren Führungsplatten 11, 13 trägt zwei parallel und mit Abstand zueinander angeordnete untere Formrollen 19, 20, wobei die drei Formrollen im Wesentlichen in Dreieckform mit einer horizontalen Basis angeordnet sind, in der die unteren Formrollen 19, 20 liegen, die ebenfalls frei drehbar sind.

Die in der Figur 1 nicht dargestellten Kunststoff-Faserbündel werden zur Durchführung durch die erfindungsgemäße Vorrichtung in zwei Gruppen parallel nebeneinander durch den Spalt zwischen der ersten unteren Formrolle 19 und der oberen Formrolle 18 und dann durch den Spalt zwischen der oberen Formrolle 18 und der zweiten unteren Formrolle 20 hindurchgeführt. Der vertikale Abstand zwischen der oberen Formrolle 18 und den unteren Formrollen 19, 20 und der horizontale Abstand zwischen den unteren Formrollen 19 und 20 ist so eingestellt, dass die Kunststoff-Faserbündel auf den Formrollen einen Umschlingungswinkel von etwa 2 - 20 °, vorzugsweise 5 - 6 °, bezogen auf die jeweilige Formrolle, durchlaufen. Damit dringen sie mit ausreichender Eindruckkraft in die in die Oberfläche der Formrollen eingearbeiteten umlaufenden U-förmigen Vertiefungen ein, um so bei ihrem Durchlauf durch die Vorrichtung eine Nachformung ihres Querschnitts zu erfahren. Der Abstand zwischen der oberen Formrolle 18 und den unteren Formrollen 19, 20 kann so klein gewählt sein, dass sich obere und untere Formrollen berühren und damit synchron laufen können, sofern die Kunststoff-Faserbündel nicht zu weit aus den Formvertiefungen vorstehen. Um den Umschlingungswinkel der Kunststoff-Faserbündel bei ihrem Durchlauf zwischen den Formrollen zu vergrößern, kann der Abstand zwischen den unteren Formrollen vergrößert werden und gleichzeitig der vertikale Abstand zwischen der oberen Formrolle und den unteren Formrollen verkleinert werden.

Die Formrollen 18, 19, 20 sind in den Führungsplatten 10-13 stirnseitig über Schnellwechselvorrichtungen befestigt. Sie können daher auf einfache Weise aus der Vorrichtung entfernt und zur Wartung oder zum Ersatz ausgetauscht werden.

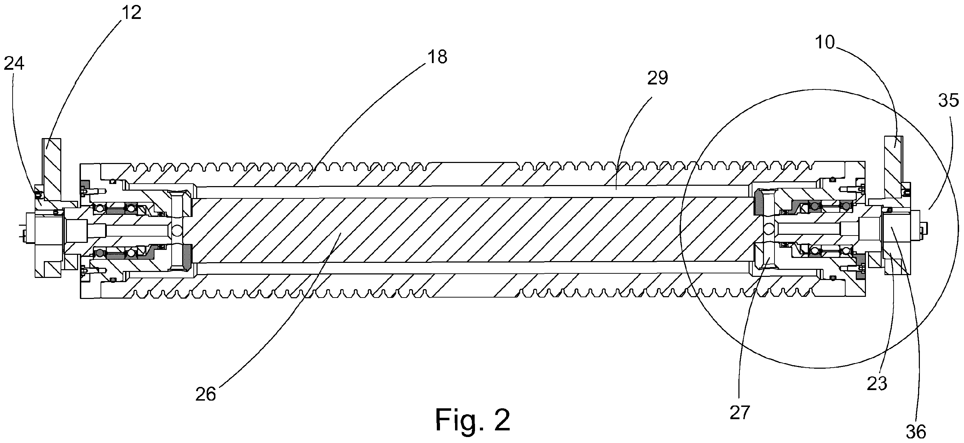

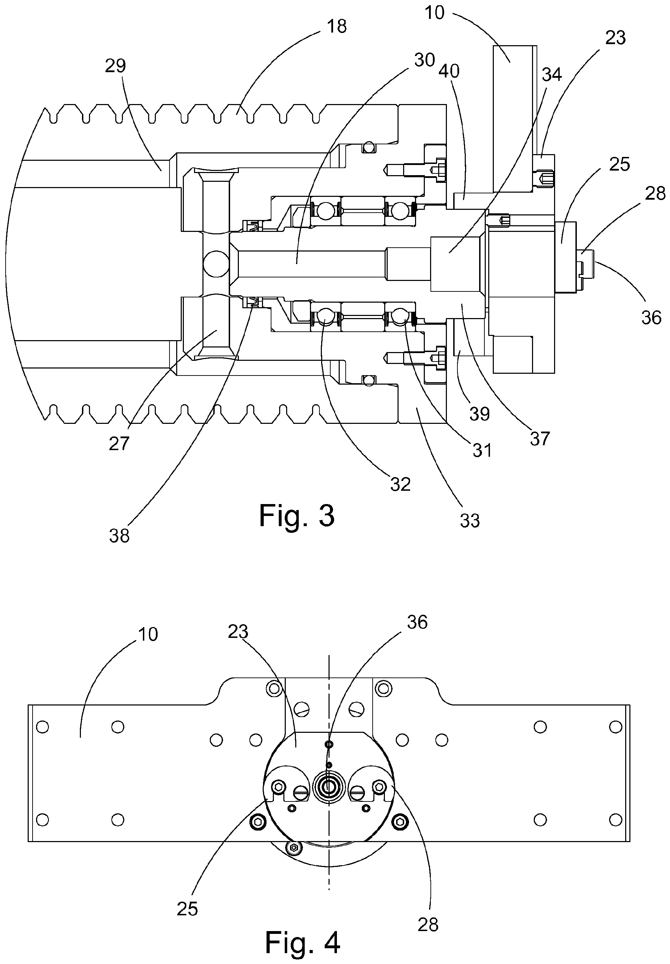

Die Figuren 2 und 3 zeigen die obere Formrolle 18 in geschnittener Seitenansicht. Die unteren Formrollen 19 und 20 sind im Wesentlichen identisch mit der oberen Formrolle gestaltet. Die Formrolle 18 ist als Hülse ausgeführt und trägt an ihrer Außenseite eine Vielzahl von parallel angeordneten umlaufenden Formvertiefungen. Über die Schnellwechselvorrichtungen 24, 35 ist die Formrolle 18 in den seitlichen Führungsplatten 10, 12 gelagert. Die Achse der Formrolle 18 ist als Verdrängungszylinder 26, insbesondere aus Kunststoff, ausgeführt, wobei zwischen der Innenwand der Formrolle 18 und dem Verdrängungszylinder 26 ein freier umlaufender Ringspalt 29 verläuft, durch den ein Flüssigmedium, insbesondere Wasser, zur Kühlung der Außenwand der Formrolle 18 hindurchgeführt wird.

Das Kühlmedium wird an einer Stirnseite der Formrolle über den Anschluss 36 und die Drehkupplung 34 zugeführt, über die Achsbohrung 30 und den Verteilerkanal 27 zum Ringspalt 29 geführt, durchläuft dann den Ringspalt 29, und wird an der anderen Stirnseite der Formrolle wieder abgeführt. Die Kühlkreisläufe der drei Formrollen können parallel oder in Reihe betrieben werden.

Die erfindungsgemäße Vorrichtung kann nicht nur zur Kühlung der Oberfläche der Formrollen, sondern in alternativen Anwendungsfällen auch zur Aufheizung mittels erhitztem Wasser oder bei geforderten noch höheren Temperaturen auch mit Öl oder entsprechend geeigneten alternativen Fluiden betrieben werden.

Der Durchmesser der oberen und unteren Formrollen ist vorzugsweise gleich, er kann jedoch für bestimmte Fälle auch unterschiedlich gewählt werden. Ein für die Zwecke der Erfindung geeigneter Durchmesser beträgt ca. 150 mm. Der Rundungsdurchmesser in den Formvertiefungen beträgt vorzugsweise 1,8 bis 3,5 mm.

Figur 3 zeigt eine Querschnittsansicht der zur Lagerung und Zu- und Abfuhr von Kühlmedium verwendeten Schnellwechselvorrichtung 35. Die hülsenförmige Formrolle 18 ist stirnseitig in einem Lagergehäuse 33 befestigt, das über Lager 31, 32 auf einer Hohlwelle 37 drehbar gelagert ist. Die Hohlwelle 37 ist stirnseitig in einer Hohlwellen-Aufnahme 23 aufgenommen, die als Teil der Schnellwechselvorrichtung 24, 35 in die Führungsplatten 10, 12 eingesetzt wird.

Die Hohlwelle 37 ist mit einer hydraulischen Drehkupplung 34 versehen, über die der Formrolle 18 Kühlmedium zugeführt wird, welches von der Drehkupplung 34 über die Achsbohrung 30 der Hohlwelle 37 und den Verteilerkanälen 27 in den Ringspalt 29 überführt wird und umgekehrt an der anderen Stirnseite der Formrolle wieder abgeführt wird. Da die Hohlwelle 37 und der Verdrängungszylinder 26 nicht drehbar sind, ist eine Dichtung 38 zwischen dem drehenden Lagergehäuse 33 und der nicht drehenden Hohlwelle 30 vorgesehen.

In Figur 4 ist die Stirnseite einer Schnellwechselvorrichtung gezeigt. Es sind zwei Schwenkhebel 25, 28 zur Befestigung der Formrolle in den Führungsplatten vorgesehen. Zur Lösung einer Formrolle ist zunächst ein Schlauch von dem zentralen Anschluss 36 und der Drehkupplung 34 abzukuppeln. Dann müssen die zwei Schwenkhebel 25, 28 gelöst und um 90° geschwenkt werden, so dass die Hohlwellenaufnahme seitlich axial aus der Führungsplatte herausgenommen werden kann und die Hohlwelle 37 nur noch auf einer Trägerleiste 39, die an der Führungsplatte 10 befestigt ist, aufliegt. Die Hohlwelle kann nun nach oben oder zur Seite entnommen werden. Das Einsetzen der Hohlwelle erfolgt in umgekehrter Weise. Die konvexe Form von Trägerleiste 29 und des durch die Führungsplatte reichenden Trägerteils 40 der Hohlwellenaufnahme 23 sichern die Hohlwelle im eingebauten Zustand in radialer Richtung.

Der Gegenstand der Erfindung ist kompakt aufgebaut, kann leicht gewartet werden und erlaubt eine effektive Nachformung mit verbesserter Rundheit von mit Kunststoff durchtränkten Faserbündeln vor der Weiterverarbeitung, insbesondere der Pellettierung oder Granulierung.

Die Vorrichtung wird vorzugsweise noch mit oberen und seitlichen in den Zeichnungen nicht dargestellten Abdeckplatten vervollständigt.

**Bezugszeichen**

| | | | |
|---|---|---|---|
| 1 | Gestell | 21 | Zahnrad |
| 2 | Schiene | 22 | Zahnstange |
| 3 | Schiene | 23 | Hohlwellen-Aufnahme |
| 4 | Unterer Brückenträger | 24 | Schnellwechselvorrichtung |
| 5 | Oberer Brückenträger | 25 | Schwenkhebel |
| 6 | Handrad | 26 | Verdrängungszylinder |
| 7 | Führungsstange | 27 | Verteilerkanal |
| 8 | Führungsstange | 28 | Schwenkhebel |
| 9 | Führungsstange | 29 | Ringspalt |
| 10 | Führungsplatte | 30 | Achsbohrung |
| 11 | Führungsplatte | 31 | Lager |
| 12 | Führungsplatte | 32 | Lager |
| 13 | Führungsplatte | 33 | Lagergehäuse |
| 14 | Hubvorrichtung | 34 | Drehkupplung |
| 15 | Hubvorrichtung | 35 | Schnellwechselvorrichtung |
| 16 | Hubvorrichtung | 36 | Anschluss |
| 17 | Hubvorrichtung | 37 | Hohlwelle |
| 18 | Obere Formrolle | 38 | Dichtung |
| 19 | Untere Formrolle | 39 | Trägerleiste |
| 20 | Untere Formrolle | 40 | Trägerteil |

## Patentansprüche

1. Vorrichtung zur Querschnittsformung einer Vielzahl parallel nebeneinander über wenigstens eine drehbare Formrolle (18) geführten Kunststoffsträngen, bei der die Formrolle (18) an ihrer Oberfläche mit einer Mehrzahl parallel angeordneter umlaufender Formvertiefungen versehen ist, in denen der Querschnitt der Kunststoffstränge entsprechend der Querschnittsform der Formvertiefungen formbar ist, wobei die wenigstens eine Formrolle (18) stirnseitig Dreh-Kupplungen (34) zur Verbindung mit Zu- und Ableitungen (36) für ein Flüssigmedium durch die Formrolle (18) aufweist und die Formrolle (18) stirnseitig in Führungsplatten (10, 12) eines Gestells (1) drehbar gelagert ist, wobei die wenigstens eine Formrolle (18) mittels einer Schnellwechselvorrichtung (24, 35) in den Führungsplatten (10, 12) gelagert ist, bei der die Dreh-Kupplungen (34) stirnseitig zentral zu den Schnellwechselvorrichtungen (24, 35) angeordnet sind, und die Formrolle (18) nach Abtrennung der Anschlüsse (36) von den Dreh-Kupplungen (34) und Entfernen der Schnellwechselvorrichtungen (24, 35) aus dem Gestell (1) herausnehmbar ist, **dadurch gekennzeichnet, dass** die Schnellwechselvorrichtung eine durch die Führungsplatte (10) geführte Hohlwellenaufnahme (23) zur Fixierung einer axialen Hohlwelle (37) der Formrolle (18) und wenigstens einen Schwenkhebel (28) aufweist, der die Hohlwellenaufnahme (23) lösbar an der Führungsplatte (10) sichert, wobei die Hohlwelle (37) nach Entfernung der Hohlwellenaufnahme (23) aus der Führungsplatte (10) unterseitig auf einer an der Führungsplatte (10) angeordneten Trägerleiste (39) ruht, bevor die Formrolle (18) aus dem Gestell (1) entnehmbar ist.

2. Vorrichtung nach Anspruch 1, **dadurch gekennzeichnet, dass** die Kunststoffstränge zwischen einem Paar von zwei aufeinander folgenden Formrollen (19, 20) an einer ersten Seite der Kunststoffstränge und einer dritten Formrolle (18), welche an der zweiten Seite der Kunststoffstränge in Laufrichtung der Kunststoffstränge zwischen der ersten (19) und zweiten Formrolle (20) des Paares von Formrollen angeordnet ist, geführt sind, wobei der Abstand zwischen den Formrollen (18, 19, 20) und in Bezug auf die Laufbahn der Kunststoffstränge einstellbar ist.

3. Vorrichtung nach Anspruch 1 oder 2, **dadurch gekennzeichnet, dass** die Temperatur der Oberflächen der Formrollen (18 - 20) steuerbar ist.

4. Vorrichtung nach Anspruch 2, **dadurch gekennzeichnet, dass** ein erstes Führungsplattenpaar (11, 13) die ersten (19) und zweiten Formrollen (20) aufnimmt und ein zweites Führungsplattenpaar (10, 12) die dritte Formrolle (18) trägt.

5. Vorrichtung nach Anspruch 1 oder 2, **dadurch gekennzeichnet, dass** die Führungsplatten (10 - 13) entlang vertikaler Stangenführungen (7, 8, 9) in vertikaler Richtung synchron verschiebbar sind.

6. Vorrichtung nach Anspruch 1 oder 2, **dadurch gekennzeichnet, dass** die Formrollen (18, 19, 20) zylinderförmig mit einem äußeren die Formvertiefungen tragenden Hohlzylinder und einem inneren koaxial zum Hohlzylinder angeordneten Verdrängungszylinder (26) ausgebildet sind, wobei Hohlzylinder und Verdrängungszylinder (26) einen radialen Abstand zueinander aufweisen, der einen Ringspalt (29) ausbildet, durch den ein Flüssigmedium zur Kühlung oder Aufheizung des Hohlzylinders geleitet werden kann.

7. Vorrichtung nach Anspruch 6, **dadurch gekennzeichnet, dass** der Ringspalt (29) zwischen Verdrängungszylinder (26) und Hohlzylinder beidseitig mit den Dreh-Kupplungen (34) in Verbindung steht, über die Flüssigmedien in den Ringspalt (29) geführt und daraus abgeleitet werden kann.

8. Vorrichtung nach Anspruch 7, **dadurch gekennzeichnet, dass** die Schnellwechselvorrichtungen (24, 35) jeweils eine hydraulische Dreh-Kupplung (34) aufweisen, die in einer Hohlwelle (37) befestigt ist, welche von der jeweiligen Schnellwechselvorrichtung trennbar ist.

9. Vorrichtung nach Anspruch 2, **dadurch gekennzeichnet, dass** die Vorrichtung mittels eines Handantriebs in Bahnrichtung der Kunststoffstränge auf einer Schienenstruktur verfahrbar ist.

## Claims

1. Device for the cross-sectional shaping of a plurality of plastic strands guided in parallel next to one another via at least one rotatable shaping roller (18), in which the shaping roller (18) is provided on its surface with a plurality of peripheral shaping depressions arranged in parallel, in which the cross section of the plastic strands can be shaped in accordance with the cross-sectional shape of the shaping depressions, the at least one shaping roller (18) having rotary couplings (34) on the front side for connection to supply and discharge lines (36) for a liquid medium through the shaping roller (18), and the shaping roller (18) being rotatably mounted on the front side in guide plates (10, 12) of a frame (1), wherein the at least one shaping roller (18) is mounted in the guide plates (10, 12) by means of a quick-change device (24, 35), in which the rotary couplings (34) are arranged on the front side so as to be central with respect to the quick-change devices (24, 35), and wherein the shaping roller (18) can be removed from the frame (1) after separation of the connections (36) from the rotary couplings (34) and removal of the quick-change devices (24, 35), **characterized in that** the quick-change device contains a hollow shaft receptacle (23) which is guided through the guide plate (10) and is intended for fixing an axial hollow shaft (37) of the shaping roller (18), and comprises at least one pivot lever (28) which releasably secures the hollow shaft receptacle (23) to the guide plate (10), the hollow shaft (37) resting, at the underside, on a support bar (39) arranged on the guide plate (10), after the hollow shaft receptacle (23) has been removed from the guide plate (10), before the shaping roller (18) can be removed from the frame (1).

2. Device according to claim 1, **characterized in that** the plastic strands are guided between a pair of two successive shaping rollers (19, 20) on a first side of the plastic strands, and a third shaping roller (18), which is arranged on the second side of the plastic strands in the running direction of the plastic strands between the first (19) and second shaping roller (20) of the pair of shaping rollers, the distance between the shaping rollers (18, 19, 20) and with respect to the track of the plastic strands being adjustable.

3. Device according to claim 1 or 2, **characterised in that** the temperature of the surfaces of the shaping rollers (18-20) is controllable.

4. Device according to claim 2, **characterised in that** a first pair of guide plates (11, 13) receives the first (19) and second shaping rollers (20), and a second pair of guide plates (10, 12) carries the third shaping roller (18).

5. Device according to claim 1 or 2, **characterised in that** the guide plates (10-13) can be displaced synchronously, in the vertical direction, along vertical rod guides (7, 8, 9).

6. Device according to claim 1 or 2, **characterized in that** the shaping rollers (18, 19, 20) are cylindrical, having an outer hollow cylinder carrying the shaping depressions and an inner displacement cylinder (26) arranged coaxially to the hollow cylinder, the hollow cylinder and the displacement cylinder (26) having a radial distance from one another which forms an annular gap (29) through which a liquid medium for cooling or heating the hollow cylinder can be guided.

7. Device according to claim 6, **characterized in that** the annular gap (29) between the displacement cylinder (26) and the hollow cylinder is connected on both sides to the rotary couplings (34), via which liquid media can be guided into the annular gap (29) and discharged therefrom.

8. Device according to claim 7, **characterized in that** the quick-change devices (24, 35) each comprise a hydraulic rotary coupling (34) which is fastened in a hollow shaft (37) which can be separated from the respective quick-change device.

9. Device according to claim 2, **characterized in that** the device can be moved on a rail structure by means of a manual drive in the path direction of the plastic strands.

## Revendications

1. Dispositif de mise en forme de section transversale d'une pluralité de cordons de matière synthétique guidés parallèlement et les uns à côté des autres par au moins un rouleau de formage rotatif (18), dans lequel le rouleau de formage (18) est pourvu à sa surface d'une pluralité de creux de formage périphériques disposés parallèlement, dans lesquels la section transversale des cordons de matière synthétique peut être mise en forme en correspondance de la forme de section transversale des creux de formage, le au moins un rouleau de formage (18) comportant frontalement des accouplements de rotation (34) à relier à des conduits d'amenée et d'évacuation (36) pour un médium liquide à travers le rouleau de formage (18) et le rouleau de formage étant monté à rotation frontalement dans des plaques de guidage (10, 12) d'un châssis (1), le au moins un rouleau de formage (18) étant monté au moyen d'un dispositif de changement rapide (24, 35) dans les plaques de guidage (10, 12), dans lequel les accouplements de rotation (34) sont disposés frontalement de manière centrale par rapport aux dispositifs de changement rapide (24, 35), et le rouleau de formage (18) peut être retiré du châssis (1) une fois que les raccordements (36) sont séparés des accouplements rotatifs (34) et les dispositifs de changement rapide (24, 35) enlevés du châssis (1), **caractérisé en ce que** le dispositif de changement rapide comporte un logement d'arbre creux (23) traversant la plaque de guidage (10) pour fixer un arbre creux axial (37) du rouleau de formage (18), et au moins un levier pivotant (28), qui immobilise le logement d'arbre creux (23) de manière non détachable sur la plaque de guidage (10) , l'arbre creux (37), après que le logement d'arbre creux (23) a été enlevé de la plaque de guidage (10), reposant côté inférieur sur un rebord porteur (39) disposé sur la plaque de guidage (10), avant que le rouleau de formage (18) puisse être enlevé du châssis (1).

2. Dispositif selon la revendication 1, **caractérisé en ce que** les cordons de matière synthétique sont guidés entre une paire de deux rouleaux de formage successifs (19, 20) d'un premier côté des cordons de matière synthétique et un troisième rouleau de formage (18) qui est disposé du deuxième côté des cordons de matière synthétique dans la direction de passage des cordons de matière synthétique entre les premier (19) et deuxième (20) rouleaux de formage de la paire de rouleaux de formage, l'écartement entre les rouleaux de formage (18, 19, 20) et par rapport à la trajectoire de passage des cordons de matière synthétique étant réglable.

3. Dispositif selon la revendication 1 ou 2, **caractérisé en ce que** la température des surfaces des rouleaux de formage (18-20) peut être commandée.

4. Dispositif selon la revendication 2, **caractérisé en ce qu'**une première paire de plaques de guidage (11, 13) loge les premier (19) et deuxième (20) rouleaux de formage (20) et une troisième paire de plaques de guidage (10, 12) porte le troisième rouleau de formage (18).

5. Dispositif selon la revendication 1 ou 2, **caractérisé en ce que** les plaques de guidage (10-13) peuvent coulisser de manière synchrone dans la direction verticale le long de guides à tiges verticaux (7, 8, 9).

6. Dispositif selon la revendication 1 ou 2, **caractérisé en ce que** les rouleaux de formage (18, 19, 20) sont agencés en forme de cylindre avec un cylindre creux extérieur portant les creux de formage et un cylindre de déplacement intérieur (26) disposé coaxialement par rapport au cylindre creux, le cylindre creux et le cylindre de refoulement (26) présentant un écartement radial l'un par rapport à l'autre qui forme un interstice annulaire (29) par lequel on peut faire passer un agent liquide pour refroidir ou chauffer le cylindre creux.

7. Dispositif selon la revendication 6, **caractérisé en ce que** l'interstice annulaire (29) entre le cylindre de déplacement (26) et le cylindre creux communique des deux côtés avec les accouplements de rotation (34) par lesquels des médiums liquides peuvent être amenés dans l'interstice annulaire (29) et évacués de celui-ci.

8. Dispositif selon la revendication 7, **caractérisé en ce que** les dispositifs de changement rapide (24, 35) comportent chacun un accouplement de rotation hydraulique (34) qui est fixé dans un arbre creux (37) qui peut être séparé du dispositif de changement rapide respectif.

9. Dispositif selon la revendication 2, **caractérisé en ce que** le dispositif peut être déplacé sur une structure à rails au moyen d'un entraînement manuel dans la direction de trajectoire des cordons de matière synthétique.
